# EUROPÄISCHE PATENTSCHRIFT

(11) **EP 2 246 846 B1**
(45) Veröffentlichungstag und Bekanntmachung des Hinweises auf die Patenterteilung: **06.06.2018**
(21) Anmeldenummer: 09159035.6
(22) Anmeldetag: 29.04.2009
(51) Int. Cl.: G10L 21/02

(54) **Schattenfilter-System für quasi-unterbestimmte blinde adaptive MIMO-Filterung**
Shadow filter system for quasi-underdetermined blind adaptive MIMO filtering
Système de filtrage à l'ombre pour un filtrage MIMO adaptatif aveugle quasi-indéterminé

(43) Veröffentlichungstag der Anmeldung: 03.11.2010
(73) Patentinhaber: Deutsche Telekom AG, 53113 Bonn (DE)
(72) Erfinder: Buchner, Herbert, 93152 Nittendorf (DE)
(74) Vertreter: Vossius & Partner Patentanwälte Rechtsanwälte mbB

(56) Entgegenhaltungen:
- EP-A- 1 400 814
- US-A1- 2005 216 258
- KELLERMANN: "A self-steering digital microphone array" IEEE CONFERENCE ON ACOUSTICS, SPEECH & SIGNAL PROCESSINGSPEECH PROCESSING, 14. April 1991 (1991-04-14), Seiten 3581-3584, XP010043800 New York, US ISBN: 978-0-7803-0003-3
- WEHR ET AL.: "'Shadow BSS' for Blind Source Separation in Rapidly Time-Varying Acoustic Scenes" INDEPENDENT COMPONENT ANALYSIS AND SIGNAL SEPARATION (LECTURE NOTES IN COMPUTER SCIENCE), Bd. 4666, 9. September 2007 (2007-09-09), Seiten 560-568, XP019080862 Heidelberg
- OCHIAI ET AL.: "Echo canceler with two echo path models" IEEE TRANSACTIONS ON COMMUNICATIONS, Bd. 25, Nr. 6, Juni 1977 (1977-06), Seiten 589-595, XP000570738 Piscataway, US ISSN: 0090-6778
- BUCHNER ET AL: "Relation between blind system indentification and convolutive blind source separation" JOINT WORKSHOP FOR HANDS-FREE SPEECH COMMUNICATION AND MICROPHONE ARRAYS, 17. März 2005 (2005-03-17), Seiten D-3-D-4, XP002554115 Piscataway, US
- BUCHNER ET AL.: "Simultaneous localization of multiple sound sources using blind adaptive MIMO filtering" IEEE CONFERENCE ON ACOUSTICS, SPEECH, AND SIGNAL PROCESSING, März 2005 (2005-03), XP002554116 Piscataway, US

## Beschreibung

### Technisches Gebiet

Die vorliegende Erfindung betrifft ein Verfahren, eine Vorrichtung, ein Computerprogramm und ein digitales Speichermedium mit einem Computerprogramm zur Signalverarbeitung mehrerer empfangener gemischter Signale zum Erzeugen von mehreren Komponentensignalen für verschiedenen Szenarien, wobei die mehreren gemischten Signale in einem Szenario mit mehreren in einem Raum vorhandenen Signalquellen von mehreren Sensoren empfangen werden.

### Hintergrund der Technik

Die Methoden zur blinden adaptiven Multiple-Input/Multiple-Output (MIMO)-Filterung werden auf Mischungen von Signalen angewendet, die von mehreren unabhängigen, zur Messung nicht einzeln zugänglicher Punktquellen herrühren. Die Signalgemische werden mittels mehrerer räumlich voneinander getrennter Sensoren ("Sensor-Arrays") aufgenommen. Ein praktisch wichtiges, und technisch anspruchsvolles Beispiel sind akustische Mensch-Maschine-Schnittstellen mit Mikrofon-Array, vor dem sich die Benutzer (Sprachsignalquellen) frei bewegen können.

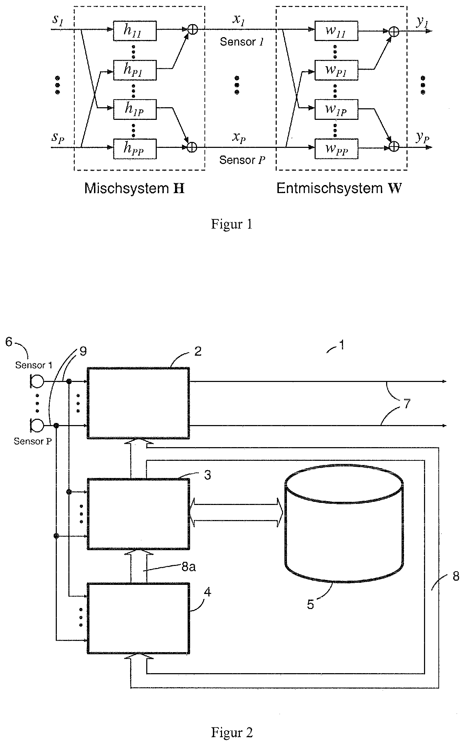

Aufgrund der räumlichen Ausbreitungseffekte in der Umgebung, wie räumlicher Nachhall im akustischen Fall, muss in praktischen Anwendungen die Gesamtheit der Signalpfade zwischen den Quellen *sᵢ* und den Sensoren *xⱼ* als MIMO-Mischsystem **H** (siehe Fig. 1) mit finite impulse response (FIR)-Filtern modelliert werden. Das nachgeschaltete MIMO-FIR-Entmischsystem **W** repräsentiert die digitale Signalverarbeitung der Sensorsignale. Dessen Filterkoeffizienten werden adaptiv, mittels eines bestimmten Optimierungskriteriums eingestellt. Die Schätzung der Filterkoeffizienten des Entmischsystems wird i.A. zeitlich fortwährend iterativ durchgeführt, um möglichen Änderungen im Mischsystem (z.B. Variationen der Sprecherpositionen) zeitlich folgen zu können.

Mögliche Ziele der Optimierung der Filterkoeffizienten sind bei der blinden adaptiven MIMO-Filterung
- **Signaltrennung** (engl. "Blind Source Separation", BSS): In diesem Fall soll jedes der Ausgangssignale *yₖ* des Entmischsystems nur noch Beiträge von jeweils einem Quellensignal *sᵢ* beinhalten, d.h., alle Kreuzpfade des Gesamtsystems zwischen den urprünglichen Quellen und den Ausgängen der Signalverarbeitung sollen sich auslöschen. Dabei sind jedoch i.A. die Ausgangssignale linear gefilterte Versionen der Quellensignale.
- **Entfaltung** (engl. "Deconvolution", in der Akustik/in Audio-Anwendungen: "Enthallung", engl. "Dereverberation"): In diesem Fall ist die Forderung strenger als bei der Signaltrennung. Zusätzlich zur Trennung sollen hier an den Ausgängen der Signalverarbeitung die ursprünglichen Quellensignale bis auf reine Verzögerungen und Skalierungen wiederhergestellt werden.

Ausserdem kann gezeigt werden, dass die blinde Signaltrennung eng mit der **blinden Systemidentifikation** (engl. "Blind System Identification") von **H** zusammenhängt: Aus den geschätzten Entmischkoeffizienten kann unmittelbar auf das phys. Mischsystem geschlossen werden [1], und hieraus beispielsweise auf die räumlichen Positionen der Quellen (**Source localization**) [1].

Nach dem bisherigen Stand der Technik sind zwei Klassen von Verfahren zur Lösung der oben genannten Signaltrennungs- und Entfaltungsprobleme bekannt:
1. Durch statistische Annahmen über die Quellensignale (z.B. wechselseitige statistische Unabhängigkeit der Quellen beim Separationsproblem), und Forderung nach Annäherung der statistischen Eigenschaften der Ausgangssignale der adaptiven Filterung bis zu statistischen Momenten einer gewissen Ordnung, ergibt sich die bekannte Methode der **"Independent Component Analysis" (ICA)** [2]. Durch Verallgemeinerung und Formulierung der ICA für breitbandige Signalanregung mit nahezu beliebiger Signalstatistik und MIMO-FIR Systeme ergibt sich ein einheitliches Konzept, welches die meisten bisher bekannten Verfahren zur adaptiven MIMO-Filterung als Spezialfälle beinhaltet ("TRIple-N ICA for CONvolutive mixtures", TRINICON), z.B. [1,3,4]. Bei geeigneter Signalanregung des Mischsystems, und geeigneter Dimensionierung des Entmischsystems können hiermit prinzipiell alle oben genannten Signalverarbeitungsprobleme in **systemtheoretisch idealer** Weise und damit signalverzerrungsfrei gelöst werden, wie oben beschrieben. Ein Beispiel für ein bekanntes Verfahren zur blinden Signalseparation, welches durch Approximationen aus diesem Konzept hervorgeht, ist [5].
2. Ausnutzung der aktuellen zeitlichen Struktur und der Zeit-Frequenz-Diversität ("sparseness") der Quellensignale, siehe z.B. [7] und darin enthaltene Referenzen. Im Unterschied zur oben genannten Klasse von Verfahren, können hiermit die blinden Signalverarbeitungsprobleme prinzipiell nicht systemtheoretisch ideal gelöst werden. Stattdessen lassen sich viele der bekannten Ansätze auf Klassifikationsprobleme zurückführen. Üblicherweise wird hierbei bisher ausserdem für das Mischsystem von einer Freifeldausbreitung (d.h., keine räumlichen Reflexionen) ausgegangen. Ferner besteht bei diesen Ansätzen die Gefahr von Signalverzerrung bei auftretenden Fehlklassifikationen. Der grosse Vorteil dieser Verfahren besteht jedoch darin, dass sie prinzipiell auch für den Fall von mehr Quellen als Sensoren (unterbestimmter Fall) angewendet werden können.

Ein Problem bei der Anwendung der ersten Klasse von Verfahren in der Praxis ist, dass die zulässige Anzahl der aktiven Signalquellen durch die vorgegebene Anzahl der Sensoren (z.B. Mikrofone) nach oben begrenzt ist [1,6]. Bei überbestimmter BSS ("overdetermined BSS") ist die Zahl der Quellen kleiner als die Zahl der Sensoren, bei (kritisch) bestimmter BSS ("critically determined BSS") ist die Quellenzahl gleich der Sensorzahl. Nur in diesen Fällen ist eine systemtheoretisch ideale Separationslösung nach der ersten Klasse von Verfahren möglich.

Für diese Fälle ist ICA die vorherrschende Technik für BSS. Soll neben der Trennung auch eine Entfaltung durchgeführt werden, muss idealerweise die Sensoranzahl die Quellenanzahl sogar übersteigen [6].
Im Unterschied hierzu, wie auch oben beschrieben, werden nach der zweiten Klasse von Verfahren die blinden Signalverarbeitungsprobleme prinzipiell nicht systemtheoretisch ideal gelöst. Stattdessen lassen sich viele der bekannten Ansätze auf Klassifikationsprobleme zurückführen. Ein Vorteil dieser Verfahren besteht jedoch darin, dass sie prinzipiell auch für den Fall von mehr Quellen als Sensoren (unterbestimmter Fall) angewendet werden können. Das Dokument US 2005/0216258 A1 (Kobayashi et al.), 29. September 2005, offenbart ein Verfahren zur MIMO-Filterung unter Verwendung von Kovarianzmatrizen.

### Zusammenfassung der Erfindung

Die vorliegende Erfindung bezieht sich auf die verbesserte Signalverarbeitung mehrerer empfangener gemischter Signale zum Erzeugen von mehreren Komponentensignalen für verschiedenen Szenarien. Die jeweiligen Szenarien werden bestimmt, zum Beispiel, durch die Anordnung und/oder die Anzahl der Signalquellen und Sensoren. Alternativ oder zusätzlich können die Szenarien die Ausbreitungsbedingungen der Signale im Raum, beispielsweise eventuelle ausgeprägte dominante Reflexionen, betreffen. Hierzu werden die mehreren gemischten Signale eines Szenarios mit mehreren im Raum vorhandenen Signalquellen von mehreren Sensoren empfangen.
Diese Aufgabe wird durch die Gegenstände der Ansprüche gelöst.
Ein Aspekt der Erfindung betrifft ein Verfahren zur Signalverarbeitung mehrerer empfangener gemischter Signale zum Erzeugen von mehreren Komponentensignalen für verschiedene Szenarien, wobei die mehreren gemischten Signale in einem Szenario mit mehreren in einem Raum vorhandenen Signalquellen von mehreren Sensoren empfangen werden. Das erfindungsgemäße Verfahren weist die im Anspruch 1 angegebenen Schritte auf:
a. Auswerten der empfangenen gemischten Signale zur Bestimmung eines aktuellen Szenarios bei dem mindestens eine der Signalquellen aktiv ist;
b. Bestimmen der Eignung eines zur MIMO-Filterung eingesetzten Filterkoeffizientensatzes für das aktuelle Szenario;
c. Vergleichen der Eignung des zur MIMO-Filterung eingesetzten Filterkoeffizientensatzes mit der Eignung von gespeicherten Muster-Filterkoeffizientensätzen zur Bestimmung des Filterkoeffizientensatzes, der für das aktuelle Szenario am besten geeignet ist;
d. Überschreiben des zur MIMO-Filterung eingesetzten Filterkoeffizientensatzes mit dem am besten geeigneten Filterkoeffizientensatz, wenn der am besten geeignete Filterkoeffizientensatz ein gespeicherter Muster-Filterkoeffizientensatz ist;
e. Ausführen mindestens eines Adaptionsschrittes, wenn der am besten geeignete Filterkoeffizientensatz, der zur MIMO-Filterung eingesetzte Filterkoeffizientensatz ist;
f. MIMO-Filtern der empfangenen gemischten Signale zum Erzeugen der mehreren Komponentensignale.

Es gilt vorzugsweise, dass die Signalquellen statistisch unabhängig und/oder Punktquellen sind.

Die erzeugten Komponentensignale bilden vorzugsweise die jeweiligen getrennten, skalierten und verzögerten und/oder linear gefilterte Versionen der Signale der mehreren Signalquellen nach.

Die mehreren empfangenen gemischten Signale werden vorzugsweise von mindestens zwei, ferner bevorzugt mindestens drei, räumlich getrennten Sensoren empfangen, die vorzugsweise Mikrofone, Sensor-Array oder Sensor-Matrix sind.

Es wird auch bevorzugt, dass maximal P der mehreren Signalquellen jeweils gleichzeitig aktiv sind, wenn P Sensoren vorhanden sind.

Der zur MIMO-Filterung eingesetzte Filterkoeffizientensatz stellt vorzugsweise mindestens ein FIR-Filter ein.

Das Überschreiben des zur MIMO-Filterung eingesetzten Filterkoeffizientensatzes erfolgt vorzugsweise mittels einer Zwischenspeicherung in einer Transfer-Logik. Es wird ferner bevorzugt, dass die bevorzugte Zwischenspeicherung in der Transfer-Logik erst nach mindestens einem Adaptionsschritt zur Filterkoeffizientenadaption des am besten geeigneten Filterkoeffizientensatzes den zur MIMO-Filterung eingesetzten Filterkoeffizientensatz überschreibt.

Es wird bevorzugt, dass die zur Filterkoeffizientenadaption des zur MIMO-Filterung eingesetzten Filterkoeffizientensatzes ausgeführte mindestens eine Adaptionsschritt, ein Schritt einer blinden Filterkoeffizientenadaption ist.

Das erfindungsgemäße Verfahren weist vorzugsweise einen Schritt zum Detektieren einer abrupten Änderung eines Szenarios auf. Dabei wird ferner bevorzugt, dass der Schritt zum Detektieren einer abrupten Änderung eines Szenarios, ein Detektieren einer abrupten Änderung in der räumlichen Anordnung und/oder der Anzahl von mindestens einer der mehreren Signalquellen und/oder Sensoren aufweist. Dabei wird weiter vorzugsweise ein Schritt zum Auswerten des zur MIMO-Filterung eingesetzten Filterkoeffizientensatzes ausgeführt.

Es wird auch bevorzugt, dass der Filterkoeffizientensatz, der vor einer Detektion einer abrupten Änderung für das aktuelle Szenario zur MIMO-Filterung eingesetzt wurde, als Muster-Filterkoeffizientensatz gespeichert wird, wobei die Anzahl der gespeicherten Muster-Filterkoeffizientensätze vorzugsweise N ist, wobei N ferner vorzugsweise mindestens 50 ist.

Der Schritt des erfindungsgemäßen Verfahrens zum Bestimmen der Eignung des zur MIMO-Filterung eingesetzten Filterkoeffizientensatzes und zum Bestimmen der jeweiligen Eignung der Mehrzahl von gespeicherten Muster-Filterkoeffizientensätzen weist vorzugsweise einen Schritt zum Bestimmen der räumlichen Anordnung der zu einem Zeitpunkt aktiven Signalquellen auf. Dabei wird vorzugsweise ein Schritt zum Auswerten der zur MIMO-Filterung eingesetzten Filterkoeffizienten ausgeführt. Es wird ferner bevorzugt, dass der Schritt zum Bestimmen der Eignung der Muster-Filterkoeffizientensätze einen Schritt zum Bestimmen der euklidischen Distanzen zwischen den aktuellen Positionen der Signalquellen und den zu den jeweiligen Muster-Filterkoeffizientensätzen zusätzlich gespeicherten zugehörigen Positionen der Signalquellen aufweist. Vorzugsweise wird dabei ein Schritt zum Vergleichen der euklidischen Distanzen mit mindestens einem Schwellenwert ausgeführt.

Es wird bevorzugt, dass der Schritt des erfindungsgemäßen Verfahrens zum Bestimmen der jeweiligen Eignung der Mehrzahl von gespeicherten Muster-Filterkoeffizientensätzen einen Schritt zum Bestimmen der Laufzeitdifferenzen in den empfangenen gemischten Signalen aufweist. Dabei wird bevorzugt, dass die Laufzeitdifferenzen durch Auswerten der entsprechenden Impulsantworten der Übertragungsfunktionen bestimmt werden. Der Schritt zum Bestimmen der jeweiligen Eignung der Mehrzahl von gespeicherten Muster-Filterkoeffizientensätzen weist vorzugsweise einen Vergleichsschritt auf, wobei die zu den jeweiligen Muster-Filterkoeffizientensätzen zugehörigen Laufzeitdifferenzen der Impulsantworten mit den bestimmten Laufzeitdifferenzen der empfangenen gemischten Signale verglichen werden.

Es wird ferner bevorzugt, dass der Schritt des erfindungsgemäßen Verfahrens zum Bestimmen der jeweiligen Eignung der Mehrzahl von gespeicherten Muster-Filterkoeffizientensätzen einen Schritt zum Vergleichen der zur MIMO-Filterung eingesetzten Filterkoeffizienten mit den jeweiligen Filterkoeffizienten der gespeicherten Muster-Filterkoeffizientensätzen aufweist.

Mindestens zwei der gespeicherten Muster-Filterkoeffizientensätzen können vorzugsweise unterschiedliche Anzahlen an Filterkoeffizienten aufweisen.

Ein weiterer Aspekt der vorliegenden Erfindung betrifft eine Vorrichtung zur Signalverarbeitung mehrerer empfangener gemischter Signale, vorzugsweise akustischer Signale, zum Erzeugen von mehreren Komponentensignalen für verschiedenen Szenarien. Die mehreren gemischten Signale werden in einem Szenario mit mehreren in einem Raum vorhandenen Signalquellen von mehreren Sensoren empfangen. Die erfindungsgemäße Vorrichtung weist auf:
- eine MIMO-Filtervorrichtung zum Erzeugen der mehreren Komponentensignale mittels einer MIMO-Filterung der mehreren empfangenen gemischten Signale;
- eine Speichervorrichtung zum Speichern einer Mehrzahl von Muster-Filterkoeffizienten;
- eine Auswerteeinrichtung zum Auswerten der empfangenen gemischten Signale zur Bestimmung eines aktuellen Szenarios bei dem mindestens eine der Signalquellen aktiv ist;
- eine Einrichtung zum Bestimmen der Eignung eines zur MIMO-Filterung eingesetzten Filterkoeffizientensatzes für das aktuelle Szenario;
- eine Vergleichseinrichtung zum Vergleichen der Eignung des zur MIMO-Filterung eingesetzten Filterkoeffizientensatzes mit der Eignung von gespeicherten Muster-Filterkoeffizientensätze, zur Bestimmung des Filterkoeffizientensatzes, der für das aktuelle Szenario am besten geeignet ist;
- eine Überschreibungsvorrichtung zum Überschreiben des zur MIMO-Filterung eingesetzten Filterkoeffizientensatzes mit dem am besten geeigneten Filterkoeffizientensatz, wenn der am besten geeignete Filterkoeffizientensatz ein gespeicherter Muster-Filterkoeffizientensatz ist;
- eine Adaptionsvorrichtung zum Ausführen mindestens eines Adaptionsschrittes zur Filterkoeffizientenadaption des zur MIMO-Filterung eingesetzten Filterkoeffizientensatzes, wenn der am besten geeignete Filterkoeffizientensatz, der zur MIMO-Filterung eingesetzte Filterkoeffizientensatz ist.

Ferner betreffen Aspekte der vorliegenden Erfindung ein Computerprogramm zum Durchführen des oben beschriebenen erfindungsgemäßen Verfahrens, und ein Speichermedium mit solch einem Computerprogramm.

Die vorliegende Erfindung deckt in vorteilhafter Weise einen praktisch relevanten Anwendungsfall ab, wonach bei P Sensoren in den verschiedenen Zeiträumen jeweils nur stets maximal P Quellen (bei reiner Separation) bzw. weniger als P Quellen (bei Entfaltung) **simultan** aktiv sind. Insgesamt kann es jedoch mehrere Signalquellen geben, deren Aktivität abwechselt. Prinzipiell wäre in diesem Szenario das oben beschriebene ICA-basierte Verfahren einsetzbar. Allerdings müsste nun bei, zum Beispiel, jedem Sprecherwechsel das MIMO-Entmischfilter völlig neu adaptiert werden. Bei schnellen Sprecherwechseln, d.h. schnell aufeinanderfolgenden abrupten Änderungen des MIMO-Mischsystems, ist dies jedoch i.A. nicht schnell genug in ausreichender Genauigkeit möglich, da z.B. im akustischen Fall das Entmischsystem mehrere tausend Filterkoeffizienten aufweisen kann.

Die hier beschriebene Erfindung vereint die Vorteile der Klassen 1 und 2 durch Erweiterung der ICA-basierten Verfahren gemäß Klasse 1 für praktisch relevante Anwendungsfälle.

### Kurzbeschreibung der Zeichnungen

Die Erfindung wird nachstehend anhand von vorteilhaften Ausführungsformen und der Zeichnung näher erläutert. Es zeigen:
Fig. 1 ein MIMO-Mischsystem **H** und ein MIMO-Entmischsystem **W**
Fig. 2 ein erfindungsgemäßes MIMO-Entmischsystem
Fig. 3 ein erfindungsgemäßes MIMO-Entmischsystem mit räumlicher Quellenlokalisierung.

### Detaillierte Beschreibung

Nachfolgend wird die Erfindung anhand von bevorzugten Ausführungsformen beschrieben.

Die hier beschriebenen Ausführungsformen der vorliegenden Erfindung betreffen beispielhafte Ausgestaltungen des oben genannten MIMO-Entmischsystem Verfahrens. Dabei basiert beispielsweise in der einen Ausführungsform die Realisierung der erfindungsgemäßen Detektion von abrupten Mischsystem-Änderungen und dem Suchprozess nach einem geeigneten Koeffizientensatz im Speicher, auf einer räumlichen Lokalisierung der Signalquellen.

Die praktische Umsetzung dieser Ausführungsmöglichkeit der Erfindung wird unterstützt durch die oben beschriebene Verbindung zwischen blinder Quellentrennung und Quellenlokalisierung [1], wonach aus den vorliegenden Entmisch-Filterkoeffizienten auf einfache Weise die notwendigen Daten entnommen werden können. Dies ist auch bereits möglich, wenn noch nicht alle Filterkoeffizienten gut konvergiert sind. Die Lokalisierung von Quellen kann demnach wesentlich schneller reagieren, als eine Signaltrennung oder gar Entfaltung.

Figur 2 zeigt die Struktur eines Ausführungsbeispiels eines erfindungsgemäßen Systems 1, wobei ein Vordergrund-Filter 2 mehrere gemischte Signale 9 von mehreren Sensoren 6 empfängt. Die empfangenen gemischten Signale 9 werden von dem Vordergrund-Filter 2 gefiltert, wodurch mehrere Komponentensignale 7 erzeugt und ausgegeben werden.

Die für die Vordergrund-Filterung 2 angesetzten Filterkoeffizienten können mittels einer Datenverbindung mit einer Transfer-Logik 3 aktualisiert werden, wobei die Transfer-Logik 3 die Filterkoeffizienten des Vordergrund-Filters 2 durch Hintergrund-Filterkoeffizienten 8 überschreibt. Die Hintergrund-Filterkoeffizienten 8 werden in einer Adaptionsschleife mit einer Adaptionsvorrichtung 4 schrittweise adaptiert, wobei die Adaptionsvorrichtung 4 zusätzlich zu den Hintergrund-Filterkoeffizienten 8 auch die mehreren gemischten Signale 9 empfängt. Die mittels der Adaptionsvorrichtung 4 adaptierten Filterkoeffizienten werden dann über eine Datenverbindung als adaptierte Hintergrund-Filterkoeffizienten 8a an die Transfer-Logik 4 übertragen, wobei die Transfer-Logik 4 darüber entscheidet, ob sie die empfangenen adaptierten Hintergrund-Filterkoeffizienten 8a in das Vordergrund-Filter 2 überträgt oder nicht.

Die Transfer-Logik 4 ist ferner mit den mehreren gemischten Signale 9 und einem Speicher 5 verbunden. Der Speicher 5 speichert eine Anzahl N von Muster-Filterkoeffizientensätzen, die jeweils unterschiedlichen Szenarien mit mehreren im Raum vorhandenen aktiven Signalquellen und Sensoren 6 zugeordnet sind.

Figur 2 zeigt somit die Struktur eines Ausführungsbeispiels eines erfindungsgemäßen Systems 1, wonach eine Adaption zunächst im Hintergrund abläuft, d.h. es werden Filterkoeffizienten 8 adaptiert, die zunächst noch nicht auf die tatsächlich ausgegebenen Signale angewendet werden. Die Koeffizienten des Hintergrund-Filters 8 werden gemäß einem weiteren Aspekt der Erfindung erst durch eine nachfolgend beschriebene Transfer-Logik 3 in das Vordergrund-Filter 2 kopiert.

Sogenannte "Dual-Filter"- oder "Schattenfilter"-Strukturen sind bisher vor allem auf dem Gebiet der überwachten adaptiven Filterung im Zusammenhang mit der Adaptionssteuerung bekannt, z.B. für akustische Echokompensation ("acoustic echo cancellation", AEC) [8,9]. Für blinde Adaptionsverfahren wurde eine Schattenfilterstruktur erstmalig in [10] vorgestellt, jedoch mit anderer Zielsetzung und anderem Wirkprinzip.

Ferner, wie oben erläutert, weist das in Fig. 2 gezeigte Ausführungsbeispiel ausserdem den Speicher 5 für weitere Koeffizientensätze für das MIMO-Entmischsystems auf. Die in Fig. 2 dargestellte Transfer-Logik 3 überprüft nun nach einem bestimmten, vorgegebenem Kriterium, ob jeweils für die weitere Signalverarbeitung der Koeffizientensatz des adaptiven Hintergrundsystems, oder einer der im Speicher 5 abgelegten Koeffizientensätze besser geeignet ist. Diese Entscheidung kann an eine vorher innerhalb der Transfer-Logik 3 durchgeführte Detektion einer abrupten Mischsystem-Änderung gekoppelt sein.

Wird, zum Beispiel, im Speicher 5 ein für das aktuell vorliegende Misch-Szenario besser geeigneter Koeffizientensatz gefunden, so kann dieser erfindungsgemäß einerseits für die weitere Adaption, und andererseits für die Vordergrundfilterung 2 verwendet werden.

Wie beispielsweise oben erläutert und in Fig. 2 gezeigt, können vor einem Kopieren der Koeffizienten in das Vordergrundfilter 2 weiterer Iterationsschritte der Adaption 4 vorgesehen werden, um beispielsweise kleinere Abweichungen auszugleichen. Dieses Vorgehen trägt der experimentellen Beobachtung Rechnung, wonach sich zwar bei abrupten, größeren Positionsänderungen der Signalquellen, beispielsweise Sprecherwechsel, die Struktur des Mischsystems stark ändert. Jedoch sind z.B. bei kleinen Kopfbewegungen der Sprecher nur geringfügige Änderungen in der Feinstruktur der akustischen Pfade beobachtbar, welche ggf. durch wenige Adaptionsschritte schnell nachführbar sind.

Wird im Speicher 5 gemäß dem Beispiel von Fig. 2 für das aktuell vorliegende Misch-Szenario kein besser geeigneter Koeffizientensatz gefunden, so können erfindungsgemäß die Koeffizienten des Hintergrund-Entmischsystems auch für das Vordergrund-Entmischsystem verwendet werden. Dieser Koeffiziententransfer kann ausserdem die Transfer-Logik 3 der "konventionellen" Schattenfilterstruktur ohne Speicher (siehe z.B. [10]) beinhalten.

Werden mangels besser geeigneter gespeicherter Koeffizientensätze die Hintergrund-Filterkoeffizienten 8 für das Vordergrundfilter 2 übernommen, so werden gemäß einem weiteren Aspekt der Erfindung der Koeffizientensatz, der zum Beispiel vor einer Detektion einer abrupten Mischsystem-Änderung im Vordergrund-Entmischsystem vorlag, in den Speicher 5 aufgenommen werden. Der Speicher 5 umfasst vorzugsweise jeweils die zeitlich letzten N zum Speicher geschickten Entmisch-Koeffizientensätze, wobei N vorzugsweise mindestens 50 ist.

Es ist ein Vorteil des erfindungsgemäßen Verfahrens gegenüber dem Stand der Technik, dass die im Zusammenhang mit der oben genannten Klasse 2 der blinden Adaptionsverfahren genannten Signalverzerrungen vermieden werden. Weiterhin kann die Erfindung auch für Faltungsmixturen, zum Beispiel bei halligen Umgebungen in der Akustik, problemlos angewandt werden. Ein weiterer Vorteil ist, dass die Erfindung in einheitlicher Weise für alle oben genannten blinden Adaptionsprobleme anwendbar ist, also nicht nur für Separation, sondern auch beispielsweise für Entfaltung und blinde Systemidentifikation.

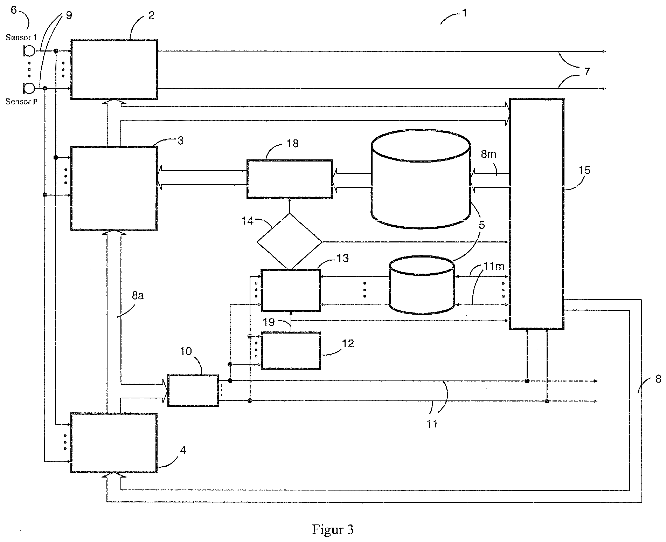

Fig. 3 zeigt eine weitere Ausgestaltung des in Fig. 2 dargestellten Ausführungsbeispiels, basierend auf einer räumlichen Quellenlokalisierung mit einer Quellenlokalisierungseinheit 10. Soweit beide Ausführungsbeispiele übereinstimmen wird auf die vorstehende Beschreibung der Fig. 2 bezug genommen.

Die Quellenlokalisierungseinheit 10 empfängt die von der Adaptionsvorrichtung 4 ausgegebenen adaptierten Hintergrund-Filterkoeffizienten 8a, und bestimmt die zugehörige Anordnung der Signalquellen und/oder Sensoren 6. Die bestimmten Quellenpositionsdaten 11 der Quellenlokalisierungseinheit 10 werden einer Detektionseinheit 12, einer Sucheinheit 13 und einer Filterkoeffizienten-Speicherungseinheit 15 zugeführt.

Die Detektionseinheit 12 dient der schnell reagierenden Änderungsdetektion des Mischsystems, wobei zum Beispiel abrupte Änderungen in der Anordnung der Signalquellen und/oder Sensoren 6 berücksichtigt werden können. Wird eine schnell reagierende Änderung des Mischsystems detektiert, so werden von der Detektionseinheit 12 über eine Triggerleitung 19 die Sucheinheit 13 und Filterkoeffizienten-Speicherungseinheit 15 getriggert. Es folgt durch die Triggerung, dass die Filterkoeffizienten-Speicherungseinheit 15 den momentanen Filterkoeffizientensatz 8m und die entsprechenden momentanen Quellenpositionsdaten 11m, die beispielsweise vor der Detektion der schnell reagierenden Änderung des Mischsystems zur Vordergrund-Filterung 2 eingesetzt wurden, als ein Muster-Koeffizientensatz im Speicher 5 abspeichert.

Der Speicher 5 kann aus zwei Speichereinheiten oder zwei Speicherbereichen bestehen. Eine Speichereinheit 5 kann die Filterkoeffizientensätze für N vorangegangene gespeicherte Quellenpositions-Szenarien speichern. Die andere Speichereinheit speichert die N vorangegangenen Quellenpositionsdaten.

Auch die Sucheinheit 13 ist mit dem Speicher 5 verbunden und wird durch die oben erläuterte Triggerung dazu aktiviert den im Speicher 5 für das aktuelle Szenario am besten geeigneten Muster-Koeffizientensatz zu bestimmen. Hier wird beispielsweise das aktuelle Szenario den von der Quellenlokalisierungseinheit 10 ausgegebenen Quellenpositionsdaten 11m zugeordnet. Der von der Sucheinheit 13 bestimmte Muster-Koeffizientensatz wird einer Vergleichseinheit 14 zugeführt, die zum Beispiel mittels eines Schwellwertvergleichs bestimmt, ob der vorliegende Muster-Koeffizientensatz den Filterkoeffizientensatz des Vordergrundfilters 2 ersetzen soll. In diesem Fall wird der entsprechende Muster-Koeffizientensatz durch eine Ausleseeinheit 18 aus dem Speicher 5 ausgelesen und an die Transfer-Logik 3 weitergegeben.

Die Quellenpositionsdaten 11 der Quellenlokalisierungseinheit 10 werden der Sucheinheit 13 zugeführt und können beispielsweise als Indizes für die Suche nach passenden Koeffizientensätzen im Speicher 5 eingesetzt werden. Für diese Aufgabe können beispielsweise die Euclidischen Distanzen zwischen den aktuellen Quellenpositionen 11 und den Quellenpositionen in den gespeicherten Szenarien, in Verbindung mit dem Schwellwertvergleich 14 verwendet werden. Ferner könnte die Suche durch eine Partitionierung des Speicher 5 vereinfacht und/oder beschleunigt werden.

Fig. 3 zeigt wie die Quellenpositionsdaten 11 von einer Filterkoeffizienten-Speicherungseinheit 15 benutzt werden, um neue Muster-Filterkoeffizienten 8m und die zugehörigen Quellenpositionen 11m in den Speicher 5 aufzunehmen. Danach können die gespeicherten Musterkoeffizienten beispielsweise mittels der Ausleseeinheit 18 aus dem Speicher 5 ausgelesen werden.

### Literatur

[1] H. Buchner, R. Aichner und W. Kellermann, "TRINICON-based blind system identification with application to multiple-source localization and separation," S. Makino, T.-W. Lee, and S. Sawada (Hrsg.), Blind Speech Separation, Springer-Verlag, Berlin/Heidelberg, S. 101-147, Sept. 2007.
[2] A. Hyvärinen, J. Karhunen und E. Oja, Independent Component Analysis, Wiley & Sons, New York, 2001.
[3] H. Buchner, R. Aichner und W. Kellermann, "Blind source separation for convolutive mixtures: A unified treatment," In Y. Huang and J. Benesty (Hrsg.), Audio Signal Processing for Next-Generation Multimedia Communication Systems, Kluwer Academic Publishers, Boston/Dordrecht/London, S. 255-293, Feb. 2004.
[4] H. Buchner, R. Aichner und W. Kellermann, "The TRINICON framework for adaptive MIMO signal processing with focus on the generic Sylvester constraint," Proc. ITG Conf. on Speech Communication, Aachen, Deutschland, Okt. 2008.
[5] European Patent EP 1070390B1, L. Parra, C. Spence: Convolutive blind source separation using a multiple decorrelation method, Europäische Patentschrift 1070390B1, Anmeldetag: 08.04.1999 mit Priorität 08.04.1998, veröffentlicht 22.06.2005, Patentklasse (IPC) H03H 21/00.
[6] M. Miyoshi und Y. Kaneda, "Inverse filtering of room acoustics," IEEE Trans. Acoust., Speech, Signal Processing, Vol. 36(2), S. 145-152, Feb. 1988.
[7] S. Araki, H. Sawada, R. Mukai und S. Makino, "Underdetermined blind sparse source separation for arbitrarily arranged multiple sensors," Signal Processing, Vol. 87, S. 1833-1847, 2007.
[8] K. Ochiai, T. Araseki und T. Ogihara, "Echo canceler with two echo path models," IEEE Transactions on Communications, Vol. COM-25, No. 6, S. 589-595, Jun. 1977.
[9] Kanadische Patentschrift CA000002233679C, J. Karlsen, A. Eriksson: An adaptive dual filter echo cancellation method, Okt. 1996.
[10] S. Wehr, A. Lombard, H. Buchner und W. Kellermann, "'Shadow BSS' for blind source separation in rapidly time-varying acoustic scenes," Proc. Int. Conf. on Independent Component Analysis and Signal Separation (ICA), London, UK, S. 560-568, Sept. 2007.

## Patentansprüche

1. Verfahren zur Signalverarbeitung mehrerer empfangener gemischter Signale zum Erzeugen von mehreren Komponentensignalen für verschiedene Szenarien, wobei die mehreren gemischten Signale in einem Szenario mit mehreren in einem Raum vorhandenen Signalquellen von mehreren Sensoren empfangen werden, mit den Schritten:
- Auswerten der empfangenen gemischten Signale zur Bestimmung eines aktuellen Szenarios, bei dem mindestens eine der Signalquellen aktiv ist;
- Bestimmen der Eignung eines zur MIMO-Filterung eingesetzten Filterkoeffizientensatzes für das aktuelle Szenario;
- Vergleichen der Eignung des zur MIMO-Filterung eingesetzten Filterkoeffizientensatzes mit der Eignung von gespeicherten Muster-Filterkoeffizientensätzen zur Bestimmung des Filterkoeffizientensatzes, der für das aktuelle Szenario am besten geeignet ist;
- Überschreiben des zur MIMO-Filterung eingesetzten Filterkoeffizientensatzes mit dem am besten geeigneten Filterkoeffizientensatz, wenn der am besten geeignete Filterkoeffizientensatz ein gespeicherter Muster-Filterkoeffizientensatz ist;
- Ausführen mindestens eines Adaptionsschrittes zur Filterkoeffizientenadaption des zur MIMO-Filterung eingesetzten Filterkoeffizientensatzes, wenn der am besten geeignete Filterkoeffizientensatz der zur MIMO-Filterung eingesetzte Filterkoeffizientensatz ist;
- MIMO-Filtern der empfangenen gemischten Signale zum Erzeugen der mehreren Komponentensignale.

2. Verfahren nach Anspruch 1, wobei die Filterkoeffizientenadaption des zur MIMO-Filterung eingesetzten Filterkoeffizientensatzes eine blinde Filterkoeffizientenadaption ist.

3. Verfahren nach Anspruch 1 oder 2, wobei der zur MIMO-Filterung eingesetzte Filterkoeffizientensatz mindestens ein FIR-Filter einstellt.

4. Verfahren nach einem der Ansprüche 1 bis 3, wobei die mehreren Signalquellen statistisch unabhängig und/oder Punktquellen sind, wobei vorzugsweise maximal P der mehreren Signalquellen jeweils gleichzeitig aktiv sind, wenn P Sensoren vorhanden sind.

5. Verfahren nach einem der Ansprüche 1 bis 4, wobei die erzeugten Komponentensignale die jeweiligen getrennten, skalierten und verzögerten und/oder linear gefilterten Versionen der jeweiligen Signale der mehreren Signalquellen nachbilden.

6. Verfahren nach einem der Ansprüche 1 bis 5, wobei das Überschreiben des zur MIMO-Filterung eingesetzten Filterkoeffizientensatzes mit dem am besten geeigneten Filterkoeffizientensatz mittels einer Zwischenspeicherung in einer Transfer-Logik ausgeführt wird, wobei vorzugsweise die Transfer-Logik erst nach mindestens einem Adaptionsschritt zur Filterkoeffizientenadaption des am besten geeigneten Filterkoeffizientensatzes den zur MIMO-Filterung eingesetzten Filterkoeffizientensatz überschreibt.

7. Verfahren nach einem der vorhergehenden Ansprüche, wobei die mehreren empfangenen gemischten Signale von mindestens zwei, vorzugsweise drei, räumlich getrennten Sensoren, vorzugsweise Mikrofonen, empfangen werden.

8. Verfahren nach einem der vorhergehenden Ansprüche, mit dem Schritt Detektieren einer abrupten Änderung eines Szenarios, wobei vorzugsweise der Schritt zum Detektieren einer abrupten Änderung eines Szenarios ein Detektieren einer abrupten Änderung in der räumlichen Anordnung von mindestens einer der mehreren Signalquellen aufweist.

9. Verfahren nach Anspruch 8, wobei das Detektieren einer abrupten Änderung in der räumlichen Anordnung von mindestens einer der mehreren Signalquellen einen Schritt zum Auswerten des zur MIMO-Filterung eingesetzten Filterkoeffizientensatzes aufweist.

10. Verfahren nach Anspruch 8 oder 9, wobei der Filterkoeffizientensatz, der vor einer Detektion einer abrupten Änderung für das aktuelle Szenario zur MIMO-Filterung eingesetzt wurde, als Muster-Filterkoeffizientensatz gespeichert wird.

11. Verfahren nach einem der vorhergehenden Ansprüche, wobei die Anzahl der gespeicherten Muster-Filterkoeffizientensätze N ist, wobei N vorzugsweise mindestens 50 ist.

12. Verfahren nach einem der vorhergehenden Ansprüche, wobei der Schritt zum Bestimmen der Eignung des zur MIMO-Filterung eingesetzten Filterkoeffizientensatzes und zum Bestimmen der jeweiligen Eignung der Mehrzahl von gespeicherten Muster-Filterkoeffizientensätzen einen Schritt zum Bestimmen der räumlichen Anordnung der zu einem Zeitpunkt aktiven Signalquellen aufweist, wobei vorzugsweise der Schritt zum Bestimmen der räumlichen Anordnung der aktiven Signalquellen einen Schritt zum Auswerten der zur MIMO-Filterung eingesetzten Filterkoeffizienten aufweist.

13. Verfahren nach Anspruch 12, wobei der Schritt zum Bestimmen der Eignung der Muster-Filterkoeffizientensätze einen Schritt zum Bestimmen der euklidischen Distanzen zwischen den aktuellen Positionen der Signalquellen und den zu den jeweiligen Muster-Filterkoeffizientensätzen zusätzlich gespeicherten zugehörigen Positionen der Signalquellen aufweist, wobei vorzugsweise der Schritt zum Bestimmen der Eignung der Muster-Filterkoeffizientensätze einen Schritt zum Vergleichen der euklidischen Distanzen mit mindestens einem Schwellenwert aufweist.

14. Computerprogramm zum Durchführen des Verfahrens nach einem der vorhergehenden Ansprüche.

15. Digitales Speichermedium mit einem Computerprogramm nach Anspruch 14.

16. Vorrichtung ⁽¹⁾ zur Signalverarbeitung mehrerer empfangener gemischter Signale ⁽⁹⁾ zum Erzeugen von mehreren Komponentensignalen ⁽⁷⁾ für verschiedenen Szenarien, wobei die mehreren gemischten Signale in einem Szenario mit mehreren in einem Raum vorhandenen Signalquellen von mehreren Sensoren ⁽⁶⁾ empfangen werden, mit:
- einer MIMO-Filtervorrichtung zum Erzeugen der mehreren Komponentensignale mittels einer MIMO-Filterung der mehreren empfangenen gemischten Signale;
- einer Speichervorrichtung zum Speichern einer Mehrzahl von Muster-Filterkoeffizienten;
- einer Auswerteeinrichtung zum Auswerten der empfangenen gemischten Signale zur Bestimmung eines aktuellen Szenarios, bei dem mindestens eine der Signalquellen aktiv ist;
- einer Einrichtung zum Bestimmen der Eignung eines zur MIMO-Filterung eingesetzten Filterkoeffizientensatzes für das aktuelle Szenario;
- einer Vergleichseinrichtung zum Vergleichen der Eignung des zur MIMO-Filterung eingesetzten Filterkoeffizientensatzes mit der Eignung von gespeicherten Muster-Filterkoeffizientensätzen, zur Bestimmung des Filterkoeffizientensatzes, der für das aktuelle Szenario am besten geeignet ist;
- eine Überschreibungsvorrichtung zum Überschreiben des zur MIMO-Filterung eingesetzten Filterkoeffizientensatzes mit dem am besten geeigneten Filterkoeffizientensatz, wenn der am besten geeignete Filterkoeffizientensatz ein gespeicherter Muster-Filterkoeffizientensatz ist;
- eine Adaptionsvorrichtung zum Ausführen mindestens eines Adaptionsschrittes zur Filterkoeffizientenadaption des zur MIMO-Filterung eingesetzten Filterkoeffizientensatzes, wenn der am besten geeignete Filterkoeffizientensatz der zur MIMO-Filterung eingesetzte Filterkoeffizientensatz ist.

17. Vorrichtung nach Anspruch 16, wobei die mehreren empfangenen gemischten Signale akustische Signale sind.

## Claims

1. A signal processing method for processing a plurality of received mixed signals for generating a plurality of component signals for different scenarios, wherein the plurality of mixed signals in a scenario with a plurality of signal sources in a room are received by a plurality of sensors, comprising the following steps:
- evaluating the received mixed signals for determining a current scenario, in which at least one of the signal sources is active;
- determining the suitability of a filter coefficient set used for MIMO filtering for the current scenario;
- comparing the suitability of the filter coefficient set used for MIMO filtering with the suitability of stored sample filter coefficient sets for determining the filter coefficient set best suited for the current scenario;
- overwriting the filter coefficient set used for MIMO filtering with the best suited filter coefficient set, if the best suited filter coefficient set is a stored sample filter coefficient set;
- executing at least one adaptation step for adapting the filter coefficients of the filter coefficient set used for MIMO filtering, if the best suited filter coefficient set is the filter coefficient set used for MIMO filtering;
- MIMO filtering the received mixed signals for generating a plurality of component signals.

2. The method according to claim 1, wherein the filter coefficient adaptation of the filter coefficient set used for MIMO filtering is a blind filter coefficient adaptation.

3. The method according to claim 1 or 2, wherein the filter coefficient set used for MIMO filtering adjusts at least one FIR filter.

4. The method according to any of claims 1 to 3, wherein the plurality of signal sources are statistically independent and/or point sources, wherein if there are P sensors present, preferably at most P of the plurality of signal sources are simultaneously active.

5. The method according to any of claims 1 to 4, wherein the generated component signals emulate the respective separate, scaled and delayed and/or linearly filtered versions of the respective signals of the plurality of signal sources.

6. The method according to any one of claim 1 to 5, wherein overwriting of the filter coefficient set used for MIMO filtering with the best suited filter coefficient is executed by buffering in a transfer logic, wherein preferably the transfer logic overwrites the filter coefficient set used for MIMO filtering only after at least one adaptation step for filter coefficient adaptation of the best suited filter coefficient set.

7. The method according to any of the preceding claims, wherein the plurality of received mixed signals are received by at least two, preferably three spatially separated sensors, preferably microphones.

8. The method according to any of the preceding claims, including the step of detecting an abrupt change in scenario, wherein the step of detecting an abrupt change in scenario preferably comprises detecting an abrupt change in the spatial arrangement of at least one of the plurality of signal sources.

9. The method of claim 8, wherein the detection of an abrupt change in the spatial arrangement of at least one of the plurality of signal sources comprises a step of evaluating the filter coefficient set used for MIMO filtering.

10. The method of claim 8 or 9, wherein the filter coefficient set used before detecting an abrupt change for the current scenario for MIMO filtering is stored as sample filter coefficient set.

11. The method according to any of the preceding claims, wherein the number of stored sample filter coefficient sets is N, wherein N is preferably at least 50.

12. The method according to any of the preceding claims, wherein the step of determining the suitability of the filter coefficient set used for MIMO filtering and of determining the respective suitability of the plurality of stored sample filter coefficient sets comprises a step of determining the spatial arrangement of the signal sources active at a point in time, wherein preferably the step of determining the spatial arrangement of the active signal sources comprises a step of evaluating the filter coefficients used for MIMO filtering.

13. The method according to claim 12, wherein the step of determining the suitability of the sample filter coefficient sets comprises a step of determining the Euclidean distances between the current positions of the signal sources and the corresponding positions of the signal sources stored additionally to the respective sample filter coefficient sets, wherein the step of determining the suitability of the sample filter coefficient sets preferably comprises a step of comparing the Euclidean distances to at least one threshold value.

14. A computer program for carrying out the method according to any of the preceding claims.

15. A digital storage medium comprising a computer program according to claim 14.

16. A signal processing device (1) for processing the plurality of received mixed signals (9) for generating a plurality of component signals (7) for different scenarios, wherein the plurality of mixed signals in a scenario with a plurality of signal sources in a room are received by a plurality of sensors (6), comprising:
- a MIMO filter device for generating the plurality of component signals by MIMO filtering the plurality of received mixed signals;
- a memory device for storing a plurality of sample filter coefficients;
- evaluation means for evaluating the received mixed signals for determining a current scenario, in which at least one of the signal sources is active;
- means for determining the suitability of a filter coefficient set used for MIMO filtering for the current scenario;
- comparing means for comparing the suitability of the filter coefficient set used for MIMO filtering with the suitability of stored sample filter coefficient sets, for determining the filter coefficient set best suited for the current scenario;
- an overwriting device for overwriting the filter coefficient set used for MIMO filtering with the best suited filter coefficient set, if the best suited filter coefficient set is a stored sample filter coefficient set;
- an adaptation device for executing at least one adaptation step for filter coefficient adaptation of the filter coefficient set used for MIMO filtering, if the best suited filter coefficient set is the filter coefficient set used for MIMO filtering.

17. The device according to claim 16, wherein the plurality of received mixed signals are acoustic signals.

## Revendications

1. Procédé de traitement de plusieurs signaux mixtes reçus pour créer plusieurs signaux à composantes pour différents scénarios, dans lequel la pluralité de signaux mixtes est reçue dans un scénario avec plusieurs sources de signaux de plusieurs capteurs présentes dans un espace, comprenant les étapes consistant à :
- évaluer les signaux mixtes reçus pour déterminer un scénario actuel dans lequel au moins une des sources de signaux est active ;
- déterminer l'adéquation d'un ensemble de coefficients de filtrage utilisé pour le filtrage MIMO, pour le scénario actuel ;
- comparer l'adéquation de l'ensemble de coefficients de filtrage utilisé pour le filtrage MIMO à l'adéquation de modèles d'ensembles de coefficients de filtrage enregistrés, afin de déterminer l'ensemble de coefficients de filtrage qui est le plus adapté pour le scénario actuel ;
- écraser l'ensemble de coefficients de filtrage utilisé pour le filtrage MIMO par l'ensemble de coefficients de filtrage le plus adapté, lorsque l'ensemble de coefficients de filtrage le plus adapté est un modèle d'ensemble de coefficients de filtrage enregistré ;
- exécuter au moins une étape pour l'adaptation de l'ensemble de coefficients de filtrage utilisé pour le filtrage MIMO lorsque l'ensemble de coefficients de filtrage le plus adapté est l'ensemble de coefficients de filtrage utilisé pour le filtrage MIMO;
- filtrer par la technique MIMO les signaux mixtes reçus pour créer la pluralité de signaux à composantes.

2. Procédé selon la revendication 1, dans lequel l'adaptation de l'ensemble de coefficients de filtrage utilisé pour le filtrage MIMO est une adaptation aveugle de coefficient de filtrage.

3. Procédé selon la revendication 1 ou 2, dans lequel l'ensemble de coefficients de filtrage utilisé pour le filtrage MIMO paramètre au moins un filtre RIF.

4. Procédé selon l'une quelconque des revendications 1 à 3, dans lequel la pluralité de sources de signaux est statistiquement indépendante et/ou correspond à des sources ponctuelles, dans lequel, de préférence, maximum P de la pluralité de sources de signaux sont simultanément actifs, lorsque P capteurs sont présents.

5. Procédé selon l'une quelconque des revendications 1 à 4, dans lequel les signaux à composantes créés reproduisent respectivement les versions séparées, mises à l'échelle et temporisées et/ou filtrées linéairement des différents signaux de la pluralité de sources de signaux.

6. Procédé selon l'une quelconque des revendications 1 à 5, dans lequel l'écrasement de l'ensemble de coefficients de filtrage utilisé pour le filtrage MIMO par l'ensemble de coefficients de filtrage le plus adapté est exécuté à l'aide d'un stockage intermédiaire dans une logique de transfert, dans lequel la logique de transfert n'écrase de préférence l'ensemble de coefficients de filtrage utilisé pour le filtrage MIMO qu'après au moins une étape d'adaptation de l'ensemble de coefficients de filtrage le plus adapté.

7. Procédé selon l'une quelconque des revendications précédentes, dans lequel la pluralité de signaux mixtes reçus est reçue depuis au moins deux, de préférence trois, capteurs séparés spatialement, de préférence des microphones.

8. Procédé selon l'une quelconque des revendications précédentes, comportant l'étape de détection d'une modification abrupte d'un scénario, dans lequel l'étape consistant à détecter une modification abrupte d'un scénario présente de préférence une détection d'une modification abrupte dans la disposition spatiale d'au moins une de la pluralité de sources de signaux.

9. Procédé selon la revendication 8, dans lequel la détection d'une modification abrupte dans la disposition spatiale d'au moins une de la pluralité de sources de signaux présente une étape consistant à évaluer l'ensemble de coefficients de filtrage utilisé pour le filtrage MIMO.

10. Procédé selon la revendication 8 ou 9, dans lequel l'ensemble de coefficients de filtrage qui a été utilisé pour le filtrage MIMO avant une détection d'une modification abrupte dans le scénario actuel est enregistré comme modèle d'ensemble de coefficients de filtrage.

11. Procédé selon l'une quelconque des revendications précédentes, dans lequel le nombre de modèles d'ensembles de coefficients de filtrage enregistrés est N, N correspondant de préférence à au moins 50.

12. Procédé selon l'une quelconque des revendications précédentes, dans lequel l'étape consistant à déterminer l'adéquation de l'ensemble de coefficients de filtrage utilisé pour le filtrage MIMO et à déterminer l'adéquation respective de la pluralité de modèles d'ensembles de coefficients de filtrage enregistrés présente une étape consistant à déterminer la disposition spatiale des sources de signaux actives à un moment donné, dans lequel l'étape consistant à déterminer la disposition spatiale des sources de signaux actives présente de préférence une étape consistant à évaluer les coefficients de filtrage utilisés pour le filtrage MIMO.

13. Procédé selon la revendication 12, dans lequel l'étape consistant à déterminer l'adéquation des modèles d'ensembles de coefficients de filtrage présente une étape consistant à déterminer les distances euclidiennes entre les positions actuelles des sources de signaux et les positions des sources de signaux correspondantes enregistrées en plus pour les modèles d'ensembles de coefficients de filtrage respectifs, dans lequel l'étape consistant à déterminer l'adéquation des modèles d'ensembles de coefficients de filtrage présente de préférence une étape consistant à comparer les distances euclidiennes à au moins une valeur seuil.

14. Programme informatique pour exécuter le procédé selon l'une quelconque des revendications précédentes.

15. Support de stockage numérique comportant un programme informatique selon la revendication 14.

16. Dispositif (1) de traitement de plusieurs signaux mixtes reçus (9) pour créer plusieurs signaux à composantes (7) pour différents scénarios, dans lequel la pluralité de signaux mixtes est reçue dans un scénario avec plusieurs sources de signaux de plusieurs capteurs (6) présentes dans un espace, comprenant :
- un dispositif de filtrage MIMO pour créer la pluralité de signaux à composantes à l'aide d'un filtrage MIMO de la pluralité de signaux mixtes reçus ;
- un dispositif d'enregistrement pour enregistrer une pluralité de modèles de coefficients de filtrage ;
- un dispositif d'évaluation pour évaluer les signaux mixtes reçus, afin de déterminer un scénario actuel dans lequel au moins une des sources de signaux est active ;
- un dispositif de détermination de l'adéquation d'un ensemble de coefficients de filtrage utilisé pour le filtrage MIMO, pour le scénario actuel ;
- un dispositif de comparaison pour comparer l'adéquation de l'ensemble de coefficients de filtrage utilisé pour le filtrage MIMO à l'adéquation de modèles d'ensembles de coefficients de filtrage enregistrés, afin de déterminer l'ensemble de coefficients de filtrage qui est le plus adapté pour le scénario actuel ;
- un dispositif d'écrasement pour écraser l'ensemble de coefficients de filtrage utilisé pour le filtrage MIMO par l'ensemble de coefficients de filtrage le plus adapté, lorsque l'ensemble de coefficients de filtrage le plus adapté est un modèle d'ensemble de coefficients de filtrage enregistré ;
- un dispositif d'adaptation pour exécuter au moins une étape d'adaptation de l'ensemble de coefficients de filtrage utilisé pour le filtrage MIMO lorsque l'ensemble de coefficients de filtrage le plus adapté est l'ensemble de coefficients de filtrage utilisé pour le filtrage MIMO.

17. Dispositif selon la revendication 16, dans lequel la pluralité de signaux mixtes reçus correspond à des signaux acoustiques.
